# EUROPÄISCHE PATENTSCHRIFT

(11) **EP 2 219 885 B1**
(45) Veröffentlichungstag und Bekanntmachung des Hinweises auf die Patenterteilung: **30.05.2012**
(21) Anmeldenummer: 08804994.5
(22) Anmeldetag: 02.10.2008
(51) Int. Cl.: B60C 11/11, B60C 11/13

(54) **FAHRZEUGLUFTREIFEN**
PNEUMATIC VEHICLE TIRE
PNEUMATIQUES DE VÉHICULE

(30) Priorität: 08.12.2007 DE 102007059292
(43) Veröffentlichungstag der Anmeldung: 25.08.2010
(73) Patentinhaber: Continental Reifen Deutschland GmbH, 30165 Hannover (DE)
(72) Erfinder: SENG, Matthias, 30449 Hannover (DE); SCHLITTENHARD, Jan, 30900 Wedemark (DE); VENNEBÖRGER, Martin, 30625 Hannover (DE)
(74) Vertreter: Finger, Karsten
(86) Internationale Anmeldenummer: PCT/EP2008/063208
(87) Internationale Veröffentlichungsnummer: WO 2009/071353

(56) Entgegenhaltungen:
- JP-A- 2002 347 412
- US-A1- 2006 108 040

## Beschreibung

Die Erfindung betrifft einen Fahrzeugluftreifen mit einem Laufstreifen, welcher durch zumindest eine in Umfangsrichtung umlaufende Umfangsnut und durch Quernuten, Schrägnuten oder dergleichen gebildete Profilelemente aufweist, welche jeweils einen spitzwinkeligen Eckbereich aufweisen, der zwischen einer die Umfangsnut begrenzenden Flankenfläche und einer eine Quernut begrenzenden Flankenfläche gebildet ist.

Fahrzeugluftreifen mit derart ausgeführten Laufstreifen sind in unterschiedlichen Ausführungsvarianten bekannt. Ein Reifen, welcher einen derartigen, zugleich laufrichtungsgebunden ausgeführten Laufstreifen aufweist, ist beispielsweise aus der US 6,823,911 B1 und der EP 0 858 917 B1 bekannt, wobei im Laufstreifen Profilelemente mit spitzwinkeligen Eckbereichen vorgesehen sind, die abgeschrägt sind, um die Profilelemente zu versteifen und derart einem ungleichmäßigen Abrieb entgegenzuwirken. Aus der EP 1 036 674 B1 ist ebenfalls ein Fahrzeugluftreifen mit einem Laufstreifen mit Blöcken mit spitzwinkeligen Eckbereichen bekannt. Die Eckbereiche sind mit jeweils einer Schräge versehen, die sich von der Laufstreifenaußenfläche radial nach innen erstreckt und durch eine dreidimensional konvexe Fläche definiert ist. Hier steht es im Vordergrund, einen unregelmäßigen Abrieb zu vermindern und die Längsstabilität des Reifens zu verbessern.

Um spitzwinkelige Ecken von Profilblöcken in Laufstreifen von Fahrzeugluftreifen zu stabilisieren, ist es aus der US 2006/0108040 A1 bekannt, die spitzwinkeligen Ecken anzufasen und an ein brückenartiges Element anzubinden, welches unmittelbar benachbarte Profilblöcke, welche mit dem das betreffende spitzwinkelige Eck aufweisende Profilblock seitlich überlappend angeordnet sind, verbinden. Aus der JP 2002 347412 A ist ein Laufstreifen für einen Fahrzeugluftreifen bekannt, welcher Profilblöcke mit spitzwinkeligen Ecken aufweist, die rampenartig und abgerundet verlängert sind, um diese Eckbereiche zu versteifen.

Spitzwinkelige Ecken an Blöcken oder blockartigen Profilelementen im Laufstreifen sind nicht nur hinsichtlich ihrer verminderten Steifigkeit und damit bezüglich der Gefahr eines ungleichförmigen Abriebes besonders heikel. Sie sind auch Stellen, an denen beim Fahren auf Nässe Verwirbelungen von durch die Umfangsnuten und die Schrägnuten bzw. Quernuten fließendes Wasser auftritt. Dabei haben geringe Geschwindigkeits- und Richtungsänderungen des Wasserflusses erhebliche Druckunterschiede in den einzelnen Nuten innerhalb der Bodenaufstandsfläche zur Folge. Dieses "Pulsieren" der Wasserströmung führt zu einer insgesamt schlechteren Wasserableitung aus der Bodenaufstandsfläche und damit zu schlechten Aquaplaningeigenschaften.

Der Erfindung liegt die Aufgabe zu Grunde, bei einem Reifen der eingangs genannten Art die spitzwinkeligen Eckbereiche an Blöcken oder Profilelementen derart auszuführen, dass das erwähnte Pulsieren der Wasserströmung bei Änderungen der Wassergeschwindigkeit und/oder der Richtung des Wasserflusses weitgehend vermieden ist.

Gelöst wird die gestellte Aufgabe erfindungsgemäß dadurch, dass die spitzwinkeligen Eckbereiche an ihrer Basis, beim Nutgrund, von einem in Draufsicht etwa U-förmigen Vorsprung umgeben sind, welcher mit seinen beiden Abschnitten entlang der Flankenflächen verläuft.

Die Vorsprünge an den spitzwinkeligen Eckbereichen bewirken eine Umlenkung des in der Bodenaufstandsfläche bzw. in den Nuten innerhalb der Bodenaufstandsfläche auf nasser Fahrbahn durchströmenden Gemisches aus Wasser und Luft, sodass Schwankungen in der Strömungsgeschwindigkeit deutlich verringert werden, insbesondere in Folge der durch die Vorsprünge bewirkten Beeinflussung bzw. Änderung des Strömungsquerschnittes. Die sonst üblicherweise auftretenden starken Druckunterschiede sind bei erfindungsgemäß ausgeführten Laufstreifen deutlich geringer.

Für eine besonders optimale Wirkung der Vorsprünge ist es von Vorteil, wenn diese eine gewisse Mindesthöhe, gemessen vom jeweiligen Nutgrund, aufweisen. Diese Mindesthöhe sollte zwischen 30% und 60% der Profiltiefe betragen. Auch die Breite der Vorsprünge ist für deren Wirkung von Bedeutung. Die maximale Breite jedes Abschnittes sollte zwischen 1 mm und 1,5 mm betragen. Die beiden Abschnitte des Vorsprunges weisen ferner eine Erstreckung an den Flankenflächen des Profilelementes in der Größenordnung zwischen 2 mm und 5 mm auf.

Weitere Merkmale, Vorteile und Einzelheiten der Erfindung werden anhand der schematischen Zeichnung, die ein Ausführungsbeispiel darstellt, näher beschrieben. Dabei zeigen
Fig. 1 eine Draufsicht auf einen Abschnitt eines Laufstreifens für einen Fahrzeugluftreifen und
Fig. 2 eine Schnittdarstellung entlang der Linie II-II der Fig. 1.

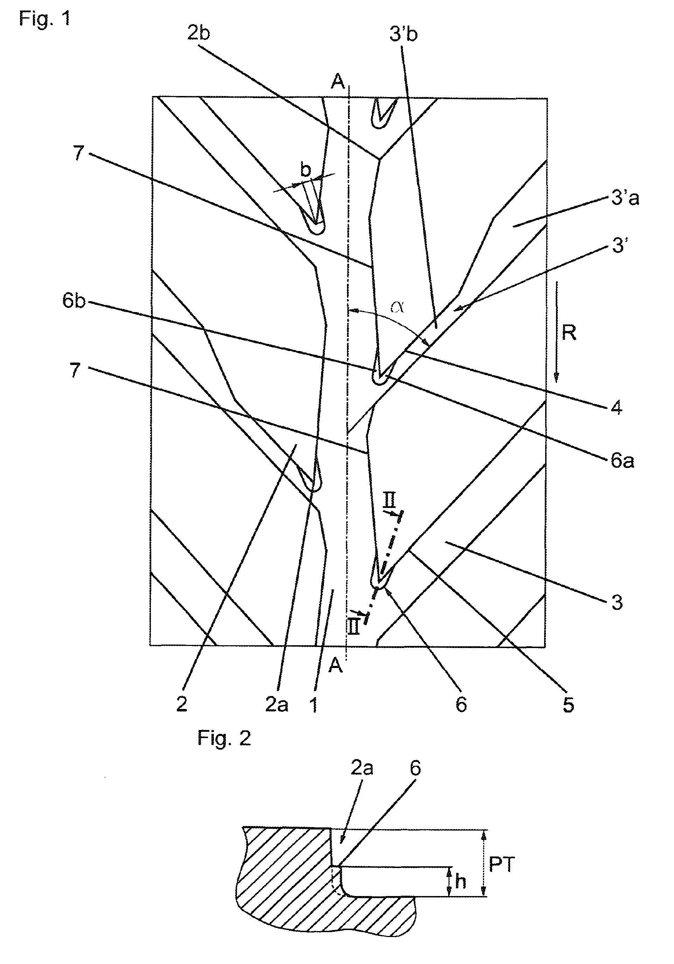

Fig. 1 zeigt beispielhaft einen Ausschnitt einer Ausführungsvariante eines Laufstreifens für einen Fahrzeugluftreifen, insbesondere für einen Reifen für Personenkraftwagen. Der Laufstreifen weist eine breite, entlang des Reifenäquators A-A in Umfangsrichtung umlaufende Umfangsnut 1 auf, welche Profilelemente 2 von einander trennt, die beispielsweise Profilblöcke je einer in Umfangsrichtung umlaufenden Blockreihe sind. Die Profilelemente 2 sind in Umfangsrichtung durch Quemuten 3, 3' voneinander getrennt, wobei die Quernuten 3, 3', welche an der einen Seite der Umfangsnut 1 verlaufen, zu jenen, die an der anderen Seite der Umfamgsnut 1 verlaufen, gegensinnig geneigt sind. Dadurch ergibt sich ein üblicherweise als gepfeilt bezeichnetes und somit laufrichtungsgebundenes Laufstreifenprofil. Die Quernuten 3, 3' sind abwechselnd vorgesehen, wobei die Quernuten 3 eine zumindest im Wesentlichen konstante Breite aufweisen und die Quernuten 3' im dargestellten Ausschnitt einen breiten Abschnitt 3'a und einen schmäleren Abschnitt 3'b aufweisen. Mit den schmäleren Abschnitten 3'b münden die Quernuten 3' in die Umfangsnut 1. Die Profilelemente 2 an der einen Seite der Umfangsnut 1 sind gegenüber jenen an der anderen Seite der Umfangsnut 1 in Umfangsrichtung um etwa die Hälfte ihrer Umfangserstreckungen versetzt.

Die Quemuten 3, 3' verlaufen unter einem Winkel α zur Umfangsrichtung A-A, welcher zwischen 30° und 60°, insbesondere in der Größenordnung von 45°, beträgt. Die Quemuten 3, 3' können sich auf nicht gezeigte Weise bis zu den Laufstreifenrändern erstrecken, wobei der Winkel, den sie mit der Umfangsrichtung einschließen, umso größer wird, je näher sie sich beim jeweiligen Laufstreifenrand befinden. Die nicht gezeigten Abschnitte des Laufstreifens können weitere in Reihen angeordnete Profilelemente aufweisen. Ein Fahrzeugluftreifen mit einem gemäß Fig. 1 ausgeführten Laufstreifen wird derart am Fahrzeug montiert, dass beim Abrollen des Reifens die in die Umfangsnut mündenden Enden der Quemuten 3, 3' zuerst in die Kontaktfläche mit dem Untergrund eintreten.

An die zentrale Umfangsnut 1 grenzt jedes Profilelement 2 mit einer Flankenfläche 7, welche über einen stumpfwinkeligen Eckbereich 2b und über einen spitzwinkeligen Eckbereich 2a in Flankenflächen 4, 5 übergehen, welche entweder eine Quernut 3 oder eine Quernut 3' begrenzen. Die Flankenflächen 4, 5 und 7 verlaufen im Wesentlichen in radialer Richtung, insbesondere derart, dass die Nuten 1, 3 und 3' im Querschnitt vom Nutgrund zur Profiloberfläche zu geringfügig breiter werden. Der diesbezügliche Neigungswinkel der Flankenflächen 4, 5 und 7 relativ zur radialen Richtung beträgt in der Größenordnung zwischen 2° und 10°.

Wie Fig. 1 in Verbindung mit Fig. 2 zeigt sind die spitzwinkeligen Eckbereiche 2a der Profilelemente 2 am Nutgrund jeweils von einem Vorsprung 6 umgeben. Der Vorsprung 6 erstreckt sich vom Nutgrund der Umfangsnut 1 bzw. der jeweiligen Quernut 3, 3' in radialer Richtung bis auf eine Höhe h, die zwischen 30 % und 60 %, insbesondere etwa 50 %, der vorgesehenen Profiltiefe PT beträgt. Der Vorsprung 6 umläuft den spitzwinkeligen Eckbereich 2a an dessen Basis in der Art eines Bugfenders mit einer abgerundeten Spitze und zwei Abschnitten 6a und 6b, deren Breite entlang ihres Verlaufes an den Flankenflächen 4, 5 und 7 kontinuierlich geringer wird, insbesondere gegen Null geht, und welche sich entlang der Flankenflächen 4, 5, 7 über 2 mm bis 5 mm erstrecken. An seinen breitesten Stellen weist der Vorsprung 6 eine Breite b zwischen 1 mm und 1,5 mm auf.

Die Vorsprünge 6 unterstützen eine optimale Wasserableitung aus der Bodenaufstandsfläche des Reifens. Das auf nassem Untergrund in die Umfangsnut 1 und in die Quemuten 3, 3' einströmende Gemisch aus Wasser und Luft wird an den Vorsprüngen 6 derart gezielt geleitet, dass die Strömungsgeschwindigkeiten in der Umfangsnut 1 und den Quemuten 3, 3' aneinander anpasst werden.

Die Erfindung ist auf das dargestellte Ausführungsbeispiel nicht eingeschränkt. Es ist zwar die Wirkung der Vorsprünge 6 im zentralen Bereich des Laufstreifens am größten, es ist jedoch auch von Vorteil, Vorsprünge gemäß der Erfindung an Profilelementen vorzusehen, die an anderer Stelle im Laufstreifen, insbesondere weiter zu den Laufstreifenrändern zu, vorgesehen sind. Die Erfindung ist ferner nicht auf laufrichtungsgebunden ausgeführte Laufstreifen eingeschränkt.

### Bezugszeichenliste

- 1: Umfangsnut
- 2: Profilelemente
- 2a: Eckbereich, spitzwinkelig
- 2b: Eckbereich, stumpfwinkelig
- 3: Quernut
- 3'....: Quernut
- 3'a: Abschnitte
- 3'b: Abschnitte
- 4: Flankenfläche
- 5: Flankenfläche
- 6: Vorsprung
- 6a: Abschnitte
- 6b: Abschnitte
- 7: Flankenfläche
- h: Höhe
- PT: Tiefe
- b: Breite

## Patentansprüche

1. Fahrzeugluftreifen mit einem Laufstreifen, welcher durch zumindest eine in Umfangsrichtung umlaufende Umfangsnut (1) und durch Quemuten (3, 3'), Schrägnuten oder dergleichen gebildete Profilelemente (2) aufweist, welche spitzwinkelige Eckbereiche (2a) aufweisen, die zwischen einer die Umfangsnut (1) begrenzenden Flankenfläche (7) und einer eine Quernut (3, 3') begrenzenden Flankenfläche (4, 5) gebildet sind,
**dadurch gekennzeichnet,**
**dass** die spitzwinkeligen Eckbereiche (2a) an ihrer Basis, beim Nutgrund, von einem in Draufsicht etwa U-förmigen Vorsprung (6) umgeben sind, welcher mit seinen beiden Abschnitten (6a, 6b) entlang der Flankenflächen (4, 5, 7) verläuft.

2. Fahrzeugluftreifen nach Anspruch 1, **dadurch gekennzeichnet, dass** der Vorsprung (6) vom Nutgrund aus betrachtet bis auf eine Höhe (h) reicht, die zwischen 30 % und 60 % der Profiltiefe (PT) beträgt.

3. Fahrzeugluftreifen nach Anspruch 1 oder 2, **dadurch gekennzeichnet, dass** jeder Abschnitt (6a, 6b) des Vorsprunges (6) eine maximale Breite (b) zwischen 1 mm und 1,5 mm aufweist.

4. Fahrzeugluftreifen nach einem der Ansprüche 1 bis 3, **dadurch gekennzeichnet, dass** die Erstreckung der beiden Abschnitte (6a, 6b) des Vorsprunges (6) an den Flankenflächen (4, 5, 7) des Profilelementes (2) zwischen 2 mm und 5 mm beträgt.

## Claims

1. Pneumatic vehicle tyre having a tread which has profile elements (2) formed by at least one circumferential groove (1) which runs around in the circumferential direction and by transverse grooves (3, 3'), oblique grooves or the like and which have acutely angled corner regions (2a) which are formed between an edge face (7) which bounds the circumferential groove (1) and an edge face (4, 5) which bounds a transverse groove (3, 3'),
**characterized**
**in that** the acutely angled corner regions (2a) are surrounded at their base, at the groove base, by a projection (6) which is approximately U-shaped in plan view and which runs with its two sections (6a, 6b) along the edge faces (4, 5, 7).

2. Pneumatic vehicle tyre according to Claim 1, **characterized in that**, viewed from the groove base, the projection (6) extends to a height (h) which is between 30% and 60% of the profile depth (PT).

3. Pneumatic vehicle tyre according to Claim 1 or 2, **characterized in that** each section (6a, 6b) of the projection (6) has an maximum width (b) between 1 mm and 1.5 mm.

4. Pneumatic vehicle tyre according to one of Claims 1 to 3, **characterized in that** the extent of the two sections (6a, 6b) of the projection (6) is between 2 mm and 5 mm at the edge faces (4, 5, 7) of the profile element (2).

## Revendications

1. Pneumatique de véhicule comprenant une bande de roulement, qui présente des éléments profilés (2) formés par au moins une rainure périphérique (1) s'étendant en boucle dans la direction périphérique et par des rainures transversales (3, 3'), des rainures obliques ou similaires, qui présentent des régions de coin (2a) en angle aigu, qui sont formées entre une surface de flanc (7) limitant la rainure périphérique (1) et une surface de flanc (4, 5) limitant une rainure transversale (3, 3'),
**caractérisé en ce que**
les régions de coin (2a) en angle aigu sont entourées au niveau de leur base, au fond de la rainure, par une saillie (6) approximativement en forme de U en vue de dessus, qui s'étend avec ses deux portions (6a, 6b) le long des surfaces de flanc (4, 5, 7) .

2. Pneumatique de véhicule selon la revendication 1, **caractérisé en ce que** la saillie (6) s'étend, considéré depuis le fond de la rainure, jusqu'à une hauteur (h) qui correspond à 30 à 60 % de la profondeur du profilé (PT).

3. Pneumatique de véhicule selon la revendication 1 ou 2, **caractérisé en ce que** chaque portion (6a, 6b) de la saillie (6) présente une largeur maximale (b) entre 1 mm et 1,5 mm.

4. Pneumatique de véhicule selon l'une quelconque des revendications 1 à 3, **caractérisé en ce que** l'étendue des deux portions (6a, 6b) de la saillie (6) au niveau des surfaces de flanc (4, 5, 7) de l'élément profilé (2) est comprise entre 2 mm et 5 mm.
